# EUROPÄISCHE PATENTSCHRIFT

(11) **EP 1 952 509 B1**
(45) Veröffentlichungstag und Bekanntmachung des Hinweises auf die Patenterteilung: **31.08.2016**
(21) Anmeldenummer: 06807473.1
(22) Anmeldetag: 23.10.2006
(51) Int. Cl.: H02K 5/10, F04B 17/03, F04B 1/04, H02K 7/075

(54) **MOTOR-PUMPEN-AGGREGAT MIT VERBESSERTER DICHTUNG**
MOTOR/PUMP ASSEMBLY WITH IMPROVED SEALING
GROUPE MOTEUR-POMPE A ETANCHEITE AMELIOREE

(30) Priorität: 24.11.2005 DE 102005056082
(43) Veröffentlichungstag der Anmeldung: 06.08.2008
(73) Patentinhaber: Brose Fahrzeugteile GmbH & Co. KG, Würzburg, 97076 Würzburg (DE)
(72) Erfinder: TUPY, Matthias, 95145 Oberkotzau (DE); STEEGMÜLLER, Horst, 97076 Würzburg (DE)
(74) Vertreter: Isarpatent
(86) Internationale Anmeldenummer: PCT/EP2006/067664
(87) Internationale Veröffentlichungsnummer: WO 2007/060066

(56) Entgegenhaltungen:
- EP-A1- 0 117 381
- EP-A2- 1 041 700
- NL-A- 7 408 828
- US-A- 5 957 464
- US-A1- 2004 241 009
- US-B1- 6 179 580

## Beschreibung

Die Erfindung betrifft ein Motor-Pumpen-Aggregat.

Aus der EP-B1-0 645 875 ist ein Motor-Pumpen-Aggregat bekannt, bei dem es sich insbesondere um eine Kraftfahrzeug-Antiblockier-Bremsvorrichtung handelt. Dieses bekannte Aggregat enthält ein Motorgehäuse, ein Pumpengehäuse und ein Elektronikgehäuse. Das Motorgehäuse liegt mit seiner einen Stirnfläche vor der einen Stirnfläche des Pumpengehäuses. Das Elektronikgehäuse liegt mit seiner einen Stirnfläche vor der anderen Stirnfläche des Pumpengehäuses. Durch die voreinander liegenden Stirnflächen und durch das Pumpengehäuse führen Verbindungsleiter als elektrische Versorgungs- bzw. Steuerleitungen zwischen jeweils dem Inneren des Motorgehäuses einerseits und des Elektronikgehäuses andererseits. Die voreinander liegenden Stirnflächen sind.durch dazwischen liegende umlaufende Dichtungen gegeneinander, insbesondere nach radial außen, abgedichtet. Bei diesen Dichtungen handelt es sich im Allgemeinen um Silikonumspritzungen.

Aus der DE-C1-101 62 247 ist ein weiteres Motor-Pumpen-Aggregat bekannt. Auch bei diesem bekannten Aggregat handelt es sich um eine Kraftfahrzeug-Bremsvorrichtung. Diese enthält in axialer Sandwich-Hintereinanderanordnung ein Motorgehäuse, ein Pumpengehäuse und ein Elektronikgehäuse. Von dem Motorgehäuse führen zumindest zwei zueinander elektrisch isolierte steckerartige Versorgungs- bzw. Steuerleitungen zu dem Elektronikgehäuse. Die steckerartigen Versorgungs- bzw. Steuerleitungen sind motorgehäuseseitig in einem Sockel, insbesondere in einer Bürstenplatte, fest fixiert, axial steif ausgebildet und quer zu ihrer Längsrichtung zumindest im Sinne von Toleranzausgleichungen frei beweglich. Die steckerartigen Versorgungs- bzw. Steuerleitungen sind unter axialer Abstützung gegenüber dem Motorgehäuse mit einer Elektronikeinheit in dem Elektronikgehäuse steckkontaktierbar. Die Bürstenplatte ist durch zumindest eine aussenrandseitige Abstutzrippe nach dem Aggregat-Zusammenbau an der Außenumfangsfläche des Motorgehäuses in Gegensteckrichtung der Versorgungs- und Steuerleitungen mit einem Presssitz unter Berücksichtigung sämtlicher Toleranzen abstützbar.

Aus der EP-Al-I 341 290 ist ein weiteres Motor-Pumpen-Aggregat bekannt, bei dem es sich insbesondere um eine Kraftfahrzeug-Bremsvorrichtung handelt. Dieses bekannte Aggregat weist einen Elektromotor und eine von diesem angetriebene, axial nachgeordnete Pumpe auf. Zwischen dem Elektromotor und der Pumpe ist eine kardangelenkartige Antriebsverbindung vorgesehen. Diese erfolgt über ein Kupplungsstück mit jeweils einer formschlüssigen Steckaufnahme für ein abtriebsseitiges Rotorwellenende des Elektromotors und für ein antriebsseitiges Pumpenwellenende der Pumpe. Die Steckaufnahme ist axial konisch ausgebildet. Das Rotorwellenende und das Pumpenwellenende haben eine gegenseitige axiale Vorspannung im Sinne einer spielfreien Drehmitnahme.

Die EP 1 041 700 A2 betrifft ein motorangetriebenes Aggregat mit einer Motoreinheit und einer Arbeitsmaschine, wobei die Motoreinheit eine Motorwelle zum Antrieb wenigstens eines Arbeitselementes der Arbeitsmaschine aufweist, und die Motorwelle wenigstens an einem der Arbeitsmaschine zugewandten Ende über ein erstes Lagre gelagert ist. Der Boden des Motorgehäuses ist mit einer Nutversehen, in welcher ein O-Ring angeordnet ist.

In der US 5,957,464 ist ein Schwalbenschwanz-Dichtungskanal beschrieben, welcher eine komplexe Geometrie aufweist, und in welchem eine Dichtung zum Abdichten zweier Bauteile eingelegt ist.

Erfolgt bei den bekannten Aggregaten die Abdichtung des Motorgehäuses zum Pumpenblock und zur Umgebung mittels Silikonumspritzungen, dann wird dazu hochkomplexes Werkzeug und auch ein hochkomplexer Prozess benötigt. Es muss weiterhin eine hohe Fehlerhäufigkeit in Kauf genommen werden. Die Werkzeug und Handlingkosten sind ebenfalls hoch.

Weiterhin ist es bereits bekannt, so genannte CIPG-Dichtungen (cured _in place gaskets) oder Nassdichtungen, die im Montageprozess des Motors auf den Hydraulikblock oder auf den Motor angespritzt werden, zu verwenden. Bei derartigen Dichtungen ist eine Nachbearbeitung der Motoren problematisch, da die Motoren vom Pumpenblock ohne Beschädigung der Dichtung nicht mehr demontiert und ausgetauscht werden können. Es entstehen hohe Kosten im Zusammenhang mit der notwendigen Verschrottung. Auch der Montageprozess ist kostenintensiv, aufwendig und fehleranfällig.

Weiterhin ist es bereits bekannt, zur Abdichtung des Motorgehäuses gegenüber dem Pumpengehäuse und der Umgebung mehrere Einzeldichtungen, beispielsweise O-Ringe oder Formringe, zu verwenden. Ein damit verbundener Nachteil besteht in der Verlierbarkeit der Einzeldichtungen. Dadurch wird eine Prüfung auf Vorhandensein der Einzeldichtungen unumgänglich. Der Aufwand während des Montageprozesses ist erhöht. Das Teilehandling ist aufwendig. Die Verwendung mehrerer Einzeldichtungen erhöht die Gesamtkosten.

Die Aufgabe der Erfindung besteht darin, eine neue, verbesserte Dichtung für ein Motor-Pumpen-Aggregat anzugeben.

Diese Aufgabe wird durch ein Motor-Pumpen-Aggregat mit den im Anspruch 1 angegebenen Merkmalen gelöst. Vorteilhafte Ausgestaltungen und Weiterbildungen der Erfindung sind in den abhängigen Ansprüchen angegeben. Die Vorteile der Erfindung bestehen insbesondere darin, dass durch den nur in einer Richtung wirkenden Spannungs- bzw. Verpressungszustand der Dichtung sowohl die Dichtfunktion verbessert als auch die Lebensdauer der Dichtung erhöht ist. Zur Sicherstellung der Dichtfunktion bedarf es keiner Silikonumspritzung. Die Dichtfunktion kann in einfacher und kostengünstiger Weise dadurch herbeigeführt werden, dass beim Zusammenbau des Motor-PumpenAggregats in die einander benachbarten Dichtungsaufnahmestufen des Motorgehäuses und der Bürstenplatte eine Dichtung eingelegt wird, die danach bei der Befestigung des Pumpengehäuses am Motor automatisch in Axialrichtung verpresst wird. Dadurch entstehen an den Kontaktstellen der Dichtung zur Dichtungsaufnahmestufe der Bürstenplatte Dichtflächen, die einen Eintritt von Bremsflüssigkeit von der Pumpenseite sicher verhindern. Weiterhin entstehen dadurch an den Kontaktstellen der Dichtung zur Dichtungsaufnahmestufe des Motorgehäuses Dichtflächen, die das Innere des Motorgehäuses gegenüber der Umgebung abdichten. Folglich wird mit nur einem Dichtungsbauteil eine robuste Dichtwirkung erzielt.

Durch die Verwendung einer einzigen Dichtung wird im Vergleich zu bekannten Aggregaten, bei denen mehrere Dichtungen verwendet werden, die Anzahl der Komponenten reduziert.

Ein weiterer Vorteil der Erfindung besteht darin, dass durch das axiale Verpressen der Dichtung auch die Befestigung der Bürstenplatte im Mötor-Pumpen-Aggregat verbessert wird.

Ein weiterer Vorteil der Erfindung besteht in einer höheren Widerstandsfähigkeit des Gesamtsystems gegen Alterungseffekte, beispielsweise in Falle einer Temperaturlagerung. Insbesondere werden unerwünschte Alterungseffekte des Kunststofflagerschildes vermieden. Außerdem werden gröbere Toleranzen am Kunststofflagerschild möglich sowie eine Entfeinerung der Einzelkomponenten. Dies reduziert die Kosten.

Ferner können mittels der Erfindung höhere Kundenanforderungen bezüglich der Abdichtfunktionalität erfüllt werden.

Weitere vorteilhafte Eigenschaften der Erfindung ergeben sich aus deren beispielhafter Erläuterung anhand der Figuren. Es zeigt
- Figur 1: eine Teil-Schnittdarstellung eines Motor-Pumpen-Aggregates gemäß der Erfindung,
- Figur 2: eine vergrößerte Darstellung des Details X von Figur 1 im noch nicht verpressten Zustand der Dichtung und
- Figur 3: eine nochmals vergrößerte Darstellung, in welcher die Abdichtung im verpressten Zustand gezeigt ist.

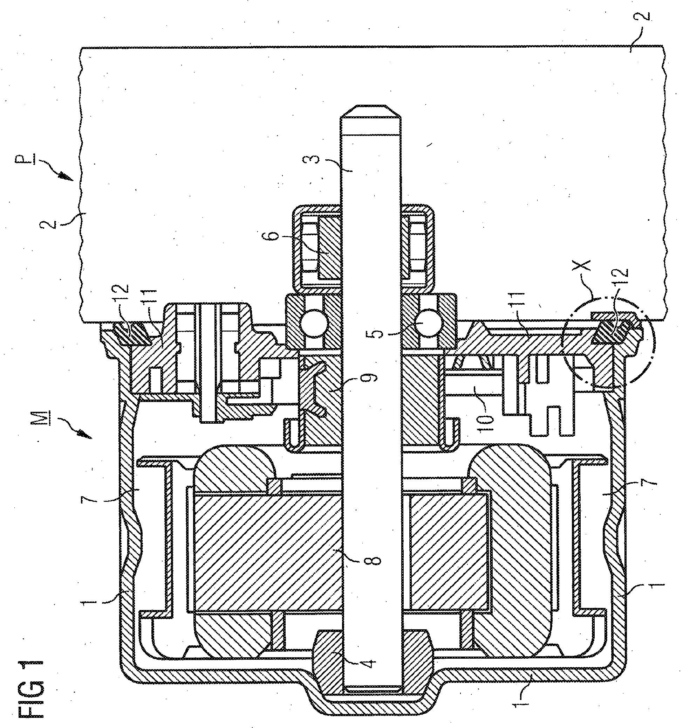

Die Figur 1 zeigt eine Teil-Schnittdarstellung eines Motor-Pumpen-Aggregates gemäß der Erfindung. Diesem Motor-Pumpen-Aggregat gehören ein Elektromotor M und eine Pumpe P an. Es kann beispielsweise in einem Kraftfahrzeug als Antiblockier-Bremsvorrichtung verwendet werden.

Der Motor M weist ein topfförmiges Motorgehäuse 1 auf. In diesem ist in Lagern 4 und 5 eine Rotorwelle 3 gelagert. Mit dieser ist ein Rotorpaket 8 fest verbunden, so dass sich im Betrieb das Rotorpaket mit der Rotorwelle dreht. An den Innenseiten des Motorgehäuses sind Magnetschalen 7 befestigt, die im Betrieb des Motors zur Erregung der dem Rotorpaket 8 zugehörigen Rotorwicklung dienen. Die Rotorwicklung ist an einen Kommutator 9 angeschlossen, der ebenfalls auf der Rotorwelle 3 befestigt ist und mit Bürsten in Verbindung steht, die von einer Bürstenplatte 11 gehaltert sind. Die Bürstenplatte 11 bildet die Abschlussfläche des Motors M zum Pumpengehäuse 2. Der Motor M ist axial an einer Stirnfläche des Pumpengehäuses 2 befestigt, beispielsweise durch eine Verschraubung. Die Rotorwelle 3 des Motors M ist durch das Lager 9 in das Pumpengehäuse 2 geführt und dort in einem pumpenseitigen Lager 6 gehaltert.

Zwischen, dem Motorgehäuse 1 und dem Pumpengehäuse 2 ist eine Dichtung 12 vorgesehen, bei der es sich vorzugsweise um einen umlaufenden Dichtring handelt. Dieser bewirkt sowohl eine Abdichtung des Motorgehäuses 1 gegenüber der Umgebung als auch eine Abdichtung des Motorgehäuses 1 gegenüber einem Eintritt von Bremsflüssigkeit, die in unerwünschter Weise aus dem Pumpengehäuse 2 austritt.

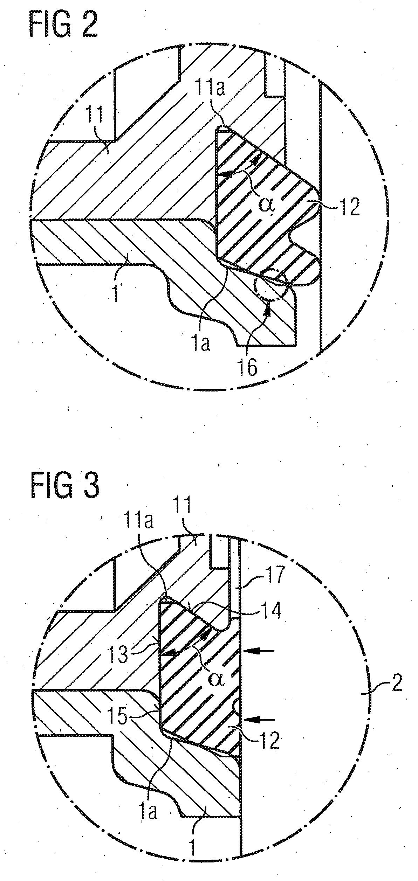

Die Figur 2 zeigt eine vergrößerte Darstellung des Details X von Figur 1, in welchem die Dichtung 12 und die zugehörigen Aufnahmeelemente im Motorgehäuse 1 und der Bürstenplatte 11 enthalten sind.

Aus dieser Figur geht hervor, dass das topfförmige Motorgehäuse 1 in seinem dem Pumpengehäuse 2 zugewandten Randbereich eine Dichtungsaufnahmestufe 1a aufweist. Ebenso ist der dem Randbereich des Motorgehäuses 1 radial benachbarte Bereich der Bürstenplatte 11 ebenfalls mit einer Dichtungsaufnahmestufe 11a versehen.

Beim Zusammenbau von Motorgehäuse 1 und Pumpengehäuse 2 wird zunächst die Dichtung 12 in die einander benachbarten Dichtungsaufnahmestufen 1a und 11a eingelegt. Es ist ersichtlich, dass die Dichtung 12 nach dem Einlegen in die Dichtungsaufnahmestufen in Axialrichtung aus dem Motorgehäuse 1 herausragt, da sie sich im noch nicht verpressten Zustand befindet.

Die in der Figur 2 gezeigte Überwachungsfläche 16 hat während des Montageprozesses eine Hilfsfunktion. Es kann in vorteilhafter Weise eine Kraftüberwachung vorgenommen werden um festzustellen, ob eine Dichtung vorhanden ist oder nicht. Dadurch kann sichergestellt werden, dass nicht versehentlich das Motorgehäuse fest mit dem Getriebegehäuse verbunden wird, ohne dass zuvor eine Dichtung in die Dichtungsaufnahmestufen 1a und 11a eingelegt wurde.

Weiterhin kann im Bereich der Überwachungsfläche 16 beim Einsetzen der Dichtung 12 in die Dichtungsaufnahmestufen 1a und 11a eine leichte Kompression der Dichtung in Radialrichtung vorgenommen werden, um die Dichtung geringfügig zu fixieren, so dass sie nach dem Einsetzen nicht sofort wieder aus den Dichtungsaufnahmestufen 1a, 11a herausfallen kann. Eine Dichtfunktion in Radialrichtung ist damit jedoch nicht verbunden.

Die Figur 3 zeigt eine nochmals vergrößerte Darstellung, in welcher die Dichtung 12 in verpresstem Zustand gezeigt ist. Dieser verpresste Zustand wird dadurch herbeigeführt, dass das Pumpengehäuse 2 in Axialrichtung an das Motorgehäuse 1 angedrückt und dann beispielsweise unter Verwendung von Schrauben an diesem befestigt wird. Bei diesem Andrücken wird die Dichtung 12 in Axialrichtung komprimiert, wie es durch die kleinen Pfeile in der Figur 3 veranschaulicht ist. Durch diese Kompression in Axialrichtung wird die Dichtung 12 in die Dichtungsaufnahmestufen 1a und 11a eingedrückt. Durch dieses Eindrücken der Dichtung entstehen zwischen dem Pumpengehäuse 2 und der Bürstenplatte 11 Dichtflächen 13 und 14. Diese verhindern ein Eindringen von Bremsflüssigkeit, die in unerwünschter Weise aus dem Pumpengehäuse 2 ausgelaufen ist und sich in der Nut 17 befindet, in das Innere des Motorgehäuses. Weiterhin entsteht durch dieses axiale Eindrücken der Dichtung in die Dichtungsaufnahmestufen eine Dichtfläche 15. Diese dichtet das Motorgehäuse 1 gegenüber der Umgebung ab, sodass keine Umgebungsmedien in das Innere des Motorgehäuses 1 gelangen können.

Zur Verbesserung der Dichtwirkung, insbesondere gegenüber einem Eintreten von Bremsflüssigkeit in das Innere des Motorgehäuses 1, sind die Flanken der Dichtungsaufnahmestufen 1a und 11a leicht angeschrägt. Dabei ist die Anschrägung der Dichtungsaufnahmestufe 11a der Bürstenplatte derart, dass die Dichtungsaufnahmestufe Flanken aufweist, die einen Winkel α einschließen, der kleiner ist als 90° und vorzugsweise im Bereich von ca. 45° liegt.

Aufgrund der Verpressung der Dichtung ausschließlich in axialer Richtung ist ein einachsiger Spannungs- bzw. Verpressungszustand gewährleistet, der sich wesentlich günstiger auf die Dichtfunktion und die Lebensdauer der Dichtung auswirkt als ein überlagerter Spannungs- bzw. Verpressungszustand, bei welchem ein Verpressen der Dichtung in axialer und radialer Richtung erfolgt und bei welchem eine höhere Nutfüllung und dadurch eine erhöhte Spannungsrelaxation bzw. beschleunigte Werkstoffalterung resultieren würde.

Eine Abdichtung des Motorgehäuses gemäß der vorliegenden Erfindung erfüllt im Unterschied zu bekannten Abdichtungen auch erhöhte Spezifikationsanforderungen bezüglich Temperaturlagerung und Temperaturwechseltests, wie sie in neuerer Zeit gestellt werden.

Ein weiterer wesentlicher Vorteil der Erfindung besteht in einer Vereinfachung des Montageprozesses des Bürstensystems. Es liegt ein robustes Bürstensystemdesign vor. Silikonumspritzungen, wie sie bisher in großem Umfang verwendet, wurden, sind nicht notwendig.

## Patentansprüche

1. Motor-Pumpen-Aggregat, insbesondere für eine Kraftfahrzeug-Bremsvorrichtung, enthaltend:
- einen Motor (M) mit einem topfförmigen Motorgehäuse (1) und einer im Motorgehäuse vorgesehenen Bürstenplatte (11 und
- eine Pumpe (P) mit einem Pumpengehäuse (2), wobei
- der Motor (M) axial an einer Stirnfläche des Pumpengehäuses (2) befestigt ist,
- die Bürstenplatte (11) die Abschlussfläche des Motors (M) zum Pumpengehäuse (2) bildet,
- der dem Pumpengehäuse (2) zugewandte Randbereich des topfförmigen Motorgehäuses (1) eine Dichtungsaufnahmestufe (1a) aufweist,
- der dem Randbereich des Motorgehäuses (1) radial benachbarte Bereich der Bürstenplatte (11) ebenfalls eine Dichtungsaufnahmestufe (11a) aufweist und
- in diese Dichtungsaufnahmestufen (1a,11a) eine Dichtung (12) eingesetzt ist, die durch die Befestigung des Pumpengehäuses (2) am Motor (M) axial zusammengepresst ist.

2. Motor-Pumpen-Aggregat nach Anspruch 1,
**dadurch gekennzeichnet, dass**
die Dichtungsaufnahmestufe (11a) der Bürstenplatte (11) eine Anschrägung aufweist, so dass die Dichtungsaufnahmestufe (11a) Flanken aufweist, die einen Winkel (α) einschließen, der kleiner als 90° ist.

3. Motor-Pumpen-Aggregat nach Anspruch 1 oder 2,
**dadurch gekennzeichnet, dass**
die Dichtungsaufnahmestufe (1a) des Motorgehäuses (1) eine Anschrägung aufweist, auf welcher eine Überwachungsfläche (16) vorgesehen ist, an welcher das Vorhandensein der Dichtung (12) detektiert wird.

## Claims

1. Motor/pump assembly, in particular for a motor vehicle braking device, including:
- a motor (M) having a pot-shaped motor housing (1) and a brush plate (11) that is provided in the motor housing and
- a pump (P) having a pump housing (2), wherein
- the motor (M) is fastened axially to an end face of the pump housing (2),
- the brush plate (11) forms the terminating surface of the motor (M) facing the pump housing (2)
- the edge region of the pot-shaped motor housing (1) that is facing the pump housing (2) comprises a seal receiving shoulder (1a),
- the region of the brush plate (11) that is radially adjacent to edge region of the motor housing (1) likewise comprises a seal receiving shoulder (11a) and
- a seal (12) is inserted into these seal receiving shoulders (la, 11a), said seal being axially pressed together by means of fastening the pump housing (2) to the motor (M).

2. Motor/pump assembly according to Claim 1,
**characterised in that**
the seal receiving shoulder (11a) of the brush plate (11) is inclined so that the seal receiving shoulder (11a) comprises flanks that include an angle (α) that is less than 90°.

3. Motor/pump assembly according to Claim 1 or 2,
**characterised in that**
the seal receiving shoulder (1a) of the motor housing (1) is inclined and a monitoring surface (16) is provided on said incline and the presence of the seal (12) is detected on said monitoring surface.

## Revendications

1. Groupe moteur-pompe, en particulier pour un dispositif de freinage de véhicule automobile, comprenant :
- un moteur (M) comportant un carter de moteur (1) en forme de pot et une plaque porte-balais (11) prévue dans le carter de moteur et
- une pompe (P) comportant un carter de pompe (2), dans lequel
- le moteur (M) est fixé de manière axiale à une face frontale du carter de pompe (2),
- la plaque porte-balais (11) forme la face terminale du moteur (M) côté carter de pompe (2),
- la zone de bord du carter de moteur (1) en forme de pot faisant face au carter de pompe (2) présente un gradin de réception de joint (la),
- la zone de la plaque porte-balais (11) radialement adjacente à la zone de bord du carter de moteur (1) présente également un gradin de réception de joint (11a) et
- dans ces gradins de réception de joint (la, 11a), un joint d'étanchéité (12) est inséré, qui est comprimé de manière axiale par la fixation du carter de pompe (2) au moteur (M).

2. Groupe moteur-pompe selon la revendication 1,
**caractérisé en ce que**
le gradin de réception de joint (11a) de la plaque porte-balais (11) comporte un chanfrein, de telle sorte que le gradin de réception de joint (11a) présente des flancs, qui forment un angle (α) qui est inférieur à 90°.

3. Groupe moteur-pompe selon la revendication 1 ou 2,
**caractérisé en ce que**
le gradin de réception de joint (la) du carter de moteur (1) présente un chanfrein sur lequel une surface de surveillance (16) est prévue, sur laquelle la présence du joint d'étanchéité (12) est détectée.
